# EUROPEAN PATENT APPLICATION

(11) **EP 2 088 656 A1**
(43) Date of publication of application: **12.08.2009**
(21) Application number: 08101411.0
(22) Date of filing: 08.02.2008
(51) Int. Cl.: H02G 15/105, H02G 15/188

(54) **A cable joint arrangement**

(71) Applicant: ABB Technology AG, 8050 Zürich (CH)
(72) Inventor: Tranefors, Kai, 504 93 Borås (SE); Persson, Martin, 441 39 Alingsås (SE); Källberg, Lars, 441 51 Alingsås (SE)
(74) Representative: Dahlstrand, Björn

(57) **Abstract**

A cable joint arrangement, comprising: a cable casing (11) comprising a metallic envelope (12), a first cable (1) provided with a first conductor (3) and extending into said envelope (12) through a first opening thereof, a second cable (2) provided with a second conductor (4) and extending into said envelope (12) through a second opening thereof, wherein the first conductor (3) is connected to the second conductor (4) inside said casing (11), wherein each cable (1, 2) is provided with an electrically conducting screen (7, 8) that surrounds the conductor (3, 4) thereof and conducts a screen current caused by inductance generated by the conductor (3, 4), and wherein said envelope (12) is in electric contact with at least one of said screens (7, 8), a connection means (15) electrically connected to at least one of said screens (7, 8) and conducting said screen current to a corresponding screen of another cable. The connection means (15) comprises a separate electric conductor (18) arranged to carry said screen current while by-passing a major part of the metallic envelope (12) as screen current carrier.

## Description

### TECHNICAL FIELD

The present invention relates to a cable joint arrangement, comprising: a cable casing comprising a metallic envelope, a first cable provided with a first conductor and extending into said envelope through a first opening thereof, a second cable provided with a second conductor and extending into said envelope through a second opening thereof, wherein the first conductor is connected to the second conductor inside said casing, wherein each cable is provided with an electrically conducting screen that surrounds the conductor thereof and conducts a screen current caused by inductance generated by the conductor, and wherein said envelope is in electric contact with at least one of said screens, and a connection means electrically connected to at least one of said screens and conducting said screen current to a corresponding screen of another cable.

The other cable the screen of which the connection means is connected to may be the other cable of the cable joint in question. This is the case in a straight through cable joint in which the screens of the two joined cables are directly connected to each other. As an alternative, the other cable the screen of which the connection means is connected to may be another cable than those provided in said joint. Typically, this is the case when the screens of the cables of a plurality of cable joints, normally three, are cross-connected.

The invention is particularly suitable for medium and high voltage applications, in which the conductors of the respective cables provides for distribution of electric power of medium and high voltage, i.e. above approximately 1 kV.

### BACKGROUND OF THE INVENTION

High voltage cables for the transmission and distribution of electric power comprise two conducting parts with an electric insulation provided in between. Said parts includes the conductor, which carries the main load, and the screen, which carries the current caused by inductance and in case of failure. The screen also provides for electrical shielding of the field generated by the conductor, and, in some applications, for hermetic water sealing, thereby preventing water from reaching and affecting the underlying electric insulation. The screen may comprise a layer made of wound wire or a sheet-like, fully sealed sheath of metal, or a combination thereof. The sheath is used in those cases when hermetic water sealing is required. In a cable joint, the screen and insulation is stripped of from the conductor in the region in which the latter is connected to the conductor of another cable, and, accordingly, there is a discontinuity in the functions of the screen. This discontinuity is, however, remedied by means of the design of the cable joint, in particular the casing thereof.

Cable accessories like a cable joint, in which the conductors of two cables are interconnected, shall rebuild all different layers in the cable, and will therefore, for some applications, comprise a casing that rebuilds the metallic sheath of the cable. In order to provide for continuous hermetic water sealing, the casing of the cable joint should be sealingly connected to the sheath or screens of the respective cables, preferably in the regions of the openings through which the cables enter into the casing.

The casing should also provide for the electrical shielding, and should therefore comprise an electrically conducting material. Preferably, the casing is electrically connected to the screen in order to have the same electric potential. The screen current is also carried by the casing. In a straight through cable joint, in which the screen of the first cable in the joint is connected to the screen of the second cable in said joint, the casing act as a bridge between said screens, carrying the screen current from one screen directly to the other. In those cases when the screens of a number of, cables ends (six ends for three joints in a three phase system) are separated in each joint and cross-connected, the casing is divided into two electrically separated parts, whereby separate conductors attached to the respective casing part is connected to the corresponding casing parts of the cables of the other joints. In straight through cable joints as well as in screen-separated cable joints the screen current is conducted through the casing, either all the way to or from the point where the cross-connection conductor is attached to the casing. In order to provide for a sufficient conductibility of the casing, casings of prior art are made of copper and have a thickness, or cross-section area, that will guarantee such functionality. However, such a design is bulky and might be expensive, dependent on the price of the preferred material, i.e. copper.

### THE OBJECT OF THE INVENTION

It is an object of the present invention to provide a cable joint arrangement the design of which promotes the use of a less bulky and less expensive casing than today's solutions.

### SUMMARY OF THE INVENTION

The object of the invention is solved by means of the initially defined cable joint arrangement, which is characterised in that said connection means comprises a separate electric conductor arranged to carry said screen current wile by-passing a major part of the metallic envelope as screen current carrier. In other words, there is provided an electric conductor that is connected to the screen, either directly or through a specific part of the metallic envelope of the casing, and that will conduct at least a part of the screen current to the screen of another cable. Thereby, said major part of the metallic envelope will be supplemented or even replaced by said separate conductor as a screen current carrier. Preferably, said major part of the metallic envelope is the part thereof that is not in direct contact with the screen, i.e. the part thereof that does not bear against the screen. Preferably, the envelope is tubular and extends in the longitudinal direction of the cables enclosed thereby, whereby a direct contact between envelope and screen only exists in end regions of the envelope in which the latter is electrically and, preferably, sealingly connected to the outer periphery of the screen. In those regions, which may, be only a fraction of the total length, a minor part of the screen current may, off course, flow through the envelope. Depending on the specific application and design such conduction of a minor part of the screen current might be unavoidable. However, such screen current conduction is harmless to the envelope and will not require the provision of any specific thickness of that part thereof or any specific material of certain electric conductance. Thanks to the invention said major part of, or even the whole, metallic envelope of the casing may be made of a material with lower requirements on electric conductibility and with a lower thickness, since the invention suggests that a substantial part, or the whole part, of the screen current be conducted by the separate conductor instead of by the metallic envelope of the casing.

Though, the connection means, i.e. said separate conductor, may be connected to the screen through the metallic envelope, it is preferred that said connection means is directly connected to said at least one screen. Should the separate conductor be connected to the screen through the metallic envelope, it is preferred that the connection point is in the region in which the envelope bears against the underlying screen, whereby the conductor is connected to the outer periphery of the envelope, for example by means of a clamp or shoe. Thereby, the size of the contact area between the separate conductor and the envelope will be decisive for the load on the envelope. However, in such a case the thickness of the envelope is of less importance for its ability of conducting the screen current from the screen to the separate conductor of the connection means. Though, if a small contact area between envelope and said connection means is preferred, the electric conductance of the material of the envelope in said region should be high enough for permitting such current-carrying through the latter over such a small cross section. If the connection means is connected directly to the screen, also the latter requirement on the material of the envelope in said region is unnecessary.

In this context is it should be mentioned that it should be understood that it is preferred that both screens of the two cables of a cable joint are connected to a connection means in the manner described herein, in order to fully take advantage of the idea of the present invention. Though, as the person skilled in the art will realise, advantages in accordance with the invention will be achieved also for those cases when there is provided such a connection means only for one out of two screens of a cable joint. This especially applies to screen-separated cable joint arrangements in which the screens are not directly connected to each other but cross-connected to screens of cables of other joints in a plural phase system.

Preferably, said connection means is connected to said at least one screen inside said casing. This feature assumes that the screen of the cable extends beyond the region in which the cable enters the casing and in which the metallic envelope of the latter is connected to the screen. Preferably, the inner volume of the casing is hermetically sealed from the surrounding environment due to the design of the casing and the tight connection between the metallic envelope and the screen. Since the casing provided for such sealing, no specific further sealing of the connection point between the connection means and the screen will be required. The contact element used, for example a shoe or the like, will also be physically protected by the casing when located inside the latter.

According to one embodiment, said connection means is connected to the screen of the first cable and the screen of the second cable, thereby interconnecting said screens. This is the typical situation of a so-called straight through joint, in which the screen of a first cable in the joint is directly connected the screen of a second cable in the joint. Prior art suggests that the interconnection of the two screens be through the metallic envelope of the casing and that the whole screen current thereby be conducted through said envelope. The invention opens for the possibility of dividing the casing into two electrically separated parts, whereby no screen current will pass through the envelope and the whole screen current will pass through the connection means, i.e. the separated conductor. As an alternative, if the metallic envelope is continuous and able of conducting current from one of the screens to the other, the separated conductor, provided that its resistance is not too high, will carry a part, preferably a major part, of the current, thereby decreasing the load on the metallic envelope of the casing. In this latter case, the separated conductor may be regarded as connected in parallel with the metallic envelope.

According to one embodiment, at least one of said screens of said first and second cables comprises at least one wire, wherein said separate electric conductor of the connection means is at least partly formed by said wire. In the case of screens that are at least partly formed by a wire, the wire may be used to form said conductor. Thereby, the interconnection of two screens may be facilitated. Preferably, if both the screens that are to be interconnected comprises a wire, the wires of the screens may be twisted in entangled into each other in order to form said conductor. The use of the wires will reduce the need of extra conductors and also reduce the need of interconnection elements.

According to one embodiment, said connection means comprises a first conductor that connects the screen of the first cable with a screen of another cable than said second cable. This is the typical case of a so-called screen-separated cable joint. Cross-connection of the screens of the cable of three parallel cable joints in a three phase system is known per se and used for the purpose of decreasing electric losses in the respective screens. Thereby, typically, the screen of a first cable of a first joint is connected to the screen of a second cable of a second joint, while the screen of the second cable of the first joint is connected to the screen of a first cable in a third joint, while the screen of the first cable of the second joint is connected to the screen of the second cable of the third joint. Normally the cross connection is provided for in a so called link-box provided outside the joints and to which the conductors from the respective joints lead. The metallic envelope of the casing of each cable joint is separated into two electrically separated parts or halves. According to prior art the respective conductor that interconnects two screens is connected to the casing parts that are connected to and associated to the respective screen, in such a manner that the whole screen current will pass through a major or substantial part of said part of the casing. Thereby, it will be required from said part that it be made of a material conductive enough and thick enough to permit such screen current carrying. The invention suggests that at least a major part, preferably all, the metallic envelope should be relieved from such screen current carrying. This is achieved either by connecting the connection means to the screen in such a manner that a reduced amount of the screen current, or no one at all, will be carried by said part of the casing. Preferably, as indicated earlier, this is achieved by connecting the connection means directly to the screen in question. Preferably, a major part of, or all, screens of said plurality of joints are connected to each other in the manner described herein, thereby minimising the screen current-carrying of the respective casing parts comprised in such a system.

In accordance with the teaching of the invention and what has been stated above, it is preferred that said connection means comprises a second conductor that connects the screen of the second cable with a screen of another cable than said first cable, wherein also this second conductor is provided in the manner previously indicated as preferred for the first separate conductor.

In accordance with the previous description of the invention, it is preferred that the screen to which the conductor of the connection means is connected presents a region in which it is exposed inside said casing with a distance to said metallic envelope, and that the conductor of the connection means is connected to the screen in said region. The conductor of the connection means is guided through an opening provided in the casing. It is important that this opening be well sealed and that the conductor of the connection means be electrically insulated from the metallic envelope in the region where it passes through said opening. If two separated conductors of said connection means are provided in a screen-separated cable joint, these two conductors may, preferably, be joined inside the casing so as to form a coaxial cable that extends to, for example, a link-box as described earlier. Off course the conductors of such a coaxial cable are to be electrically insulated from each other. This solution governs that a compact solution with only one opening in the casing for the two conductors of the connection means be provided.

It is also preferred that the conductor, or conductors, of the connection means presents an electric conductibility equal to or higher than that of the screen to which it is connected. This is in particular relevant for the case of a straight through cable joint in which the metallic envelope is connected in parallel with said separated conductor of the connection means and wherein the current carried by the envelope will decrease as the conductivity of the separate conductor is increased.

According to a preferred embodiment, said major part of the metallic envelope comprises aluminium or an aluminium alloy. Aluminium, and in particular alloys on basis thereof, has the advantage of presenting a low density, a high mechanical strength, in particular a high mechanical strength/density ratio, and a relatively high conductivity, and also of being relatively cheap, at least in comparison to the dominating material of prior art, i.e. copper. The invented design of the cable joint arrangement will permit the use of a material of lower electric conductivity than copper, and aluminium and its alloys are, for the given reasons, a preferred alternative.

It should be noted that even though parts of the metallic envelope may comprise materials or compositions other than aluminium or its alloys, it is preferred that the whole metallic envelope comprises aluminium or an aluminium alloy.

Further features and advantages of the invention will be presented in the following detailed description and in the enclosed patent claims.

### BRIEF DESCRIPTION OF THE DRAWINGS

Embodiments of the invention will now, by way of example, be described more in detail with reference to the annexed drawing, on which,
Fig. 1 is a cross-sectional side view of a first embodiment of a cable joint according to the invention,
Fig. 2 is a cross-sectional side view of a second embodiment of a cable joint according to the invention,
Fig. 3 is a schematic representation of a cross-connection scheme for a three phase system with three cable joint arrangements.

### DETAILED DESCRIPTION OF THE INVENTION

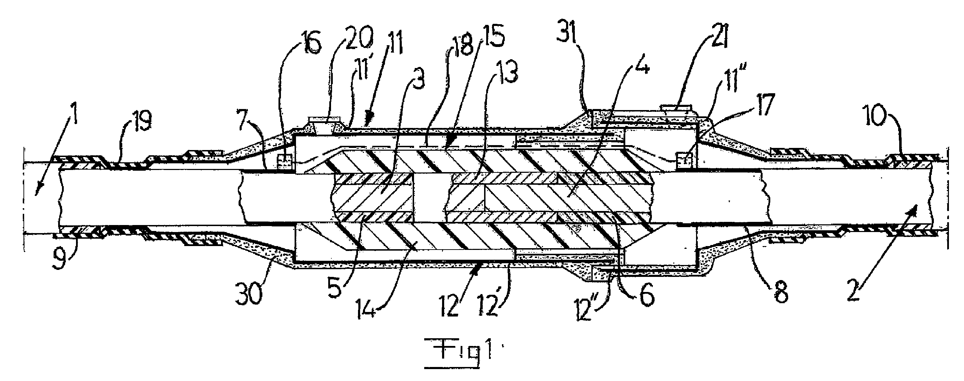

Fig. 1 shows a cable joint arrangement according to the invention. In this specific embodiment the cable joint arrangement is a straight through joint in which screens of two electric power transmission cables joined by said joint are directly connected to each other.

The arrangement shown in fig. 1 comprises a first cable 1 and a second cable 2. Each cable 1, 2 is provided with a main conductor 3, 4 through which high voltage electric power is transmitted. On the outside of each main conductor 3, 4 there is provided a an electric insulation 5, 6, which, in its turn is enclosed by an electrically conducting screen 7, 8. The screen 7, 8 has the task of preventing water from penetrating and affecting the electric insulation 5, 6. It also has the task of controlling an electric field generated by the associated conductor 3, 4. Outside the screen 7, 8 and enclosing the latter there is provided protecting and electrically insulating cover or layer 9, 10. Each screen 7, 8 will carry a screen current induced by the field generated by the conductors 3, 4.

The arrangement further comprises a casing 11 formed by a metallic envelope 12 and a protection and electrically covering layer 30 provided on the latter. The casing 11 is subdivided into two separate, tubular parts 11', 11" joined in region 31 in which they overlap each other. In this embodiment, the metallic envelope 12 therefore comprises two electrically separated parts 12', 12" associated to the respective part 11', 11 " of the casing 11. The metallic envelope 12 is formed by an aluminium alloy, and the covering layer by any suitable polymer, such as polyamide.

At opposite end regions of the casing 11, the cables 3, 4 enter the casing through a respective opening therein. In each such region the outer protecting cover 9, 10 is stripped of from the rest of the cable and the screen 7, 8 is exposed and electrically connected to the associated part 12', 12" of the metallic envelope 12. A covering sleeve 19 is provided on said region in order to guarantee electric insulation. Each screen 7, 8 continues exposed a bit further into the casing 11 and then ends, thereby exposing the underlying electric insulation 5, 6. Each part 11', 11 " of the casing 11 expands from their opposite end regions towards the region 31 in which they are joined, thereby leaving a space between the inner periphery of the casing 11 and the cables 1, 2.

Inside the casing 11, the conductors 3, 4 of the two cables are joined in a way known per se. A connection device 13 is provided for this purpose, and the connection device 13 is enclosed by an electrically insulating body 14. The electric insulation body 14 preferably comprises a rubber material such as EPDM and encloses the meeting cables generally all the way between the end regions of the tubular envelope 12. Between the insulation body 14 and the inner periphery of the metallic tubular envelope 12 there is provided a filler, preferably a filler with higher thermal conductivity than air. Said filler may comprise sand as a main constituent. Another conceivable material might be a gel, for instance a silicone-based gel, preferably of a kind provided with compressible, gas-filled microspheres of a polymer material, for the purpose of compensating for thermally generated volumetric changes of the gel material itself, and preferably provided with any further particles that improves the thermal conductivity of said filler, such as Boron nitride particles. The casing 11 is also provided with openings and caps 20, 21 in which the above-mentioned filler may be introduced into the casing after the mounting thereof around the cable joint

Inside the casing 11 there is provided a connection means 15 formed by cable lugs 16, 17 connected to the exposed end of the screens 7, 8 of the respective cable 1, 2, and by a separate conductor 18, indicated with broken lines in fig. 1, that extends between said cable lugs 16, 17, thereby electrically interconnecting said screens 7, 8. As a result thereof, and of the electrical separation of the two parts 12', 12" of the metallic envelope 12 of the casing 11, the screen current is carried from one screen to the other not through the metallic envelope 12 but only through the separate electric conductor 18 of the connection means 15. Thereby, the use of a thinner and less conductive metallic envelope is permitted, which is one of the big advantages of the design of the embodiment shown. As an alternative to the use of said lugs, and if the screens comprise wires, the conductor 18 may be formed by the wires of the screens.

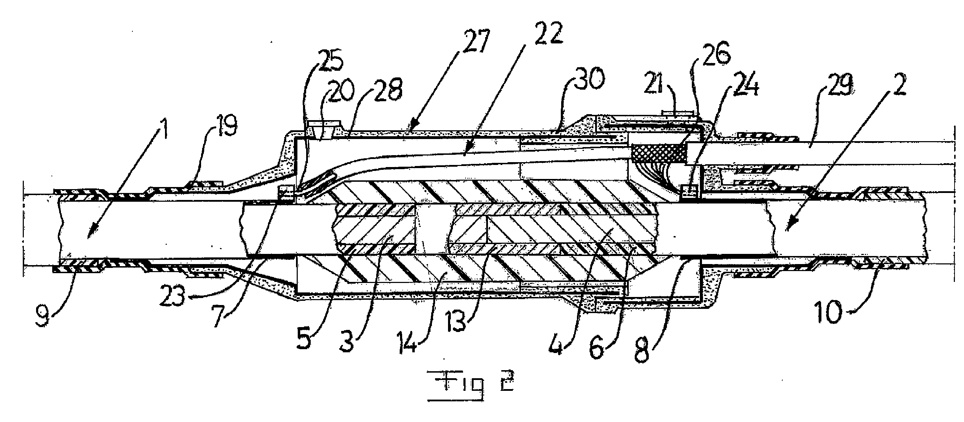

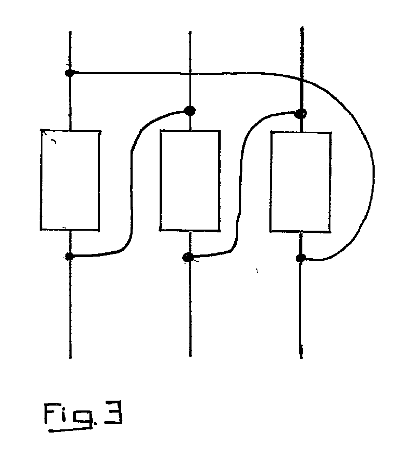

Fig. 2 shows a second embodiment of the invention in which parts corresponding to those of the embodiment shown in fig. 1 are provided with the same reference numbers. The main difference between the embodiment of fig. 2 in comparison to that of fig. 1 is that it shows an arrangement in which the screens 7, 8 of the first and second cables 1, 2 are not directly connected to each other but electrically separated in order to provide for a so-called cross-connection of the screens of a three-phase system of cables and their associated joints. The principle of such a connection is shown in a scheme in fig. 3 in which the screens of the cables of three joints like the one shown in fig. 2 are cross-connected. Though not shown in fig. 3, a so-called link-box may be used for the cross-linking of the respective screens. Screen separation is used as a means for decreasing electrical losses in the cables. Since the principle is well known, no further detailed background to this measure is given here.

The cable joint arrangement shown in fig. 2 presents a connection means 22 comprising an electric connection element formed by a cable lug or the like 23 connected to the screen 7 of the first cable 1, and a corresponding electric connection element 23 connected to the screen 8 of the second cable 2. The connection means 22 also comprises a first separate conductor 25 connected to the connection means 22 of the first cable 1, and a second separate conductor 26 connected to the connection element 24 of the second cable. The first and second separate conductors 25, 26 of he connection means 22 are arranged for the purpose of being connected to a respective screen of two cables of two other phases (see fig. 3).

The casing 27 of the embodiment of fig. 2 differs from that of fig. 1 in that it comprises an opening through which the separate conductors 25, 26 are to be guided to the exterior. This difference also applies to the metallic envelope 28. Likewise to the embodiment of fig. 1 each of the casing 27 and the envelope 28 is divided into two separate, interconnected tubular parts, wherein the two parts of the metallic envelope 28 are electrically insulated from each other by the cover 30. Actually, the separate conductors 25, 26 of the connection means 22 enter into the casing 27 as a coaxial cable 29, in which they are electrically separated from each other. Inside the casing, they are physically separated in order to be connected to their respective associated screen 7, 8. Off course the coaxial cable 29 comprises an outer electrically insulating and physically protecting cover. Preferably it is connected to a so called link-box, in which the connection in accordance with the principle of fig. 3 is provided for, and from which corresponding second and third coaxial cables extend to the joint arrangements of two other phases of an electric three phase system.

As to the remaining features of the embodiment of fig. 2, reference is made to the description of the embodiment shown in fig. 1.

It should be understood that the above description has been made by way of example and that alternative embodiments will be obvious for a person skilled in the art, however without departing from the scope of the present invention, which is defined in the annexed claims, supported by the description and the drawing.

## Claims

1. A cable joint arrangement, comprising
- a cable casing (11, 27) comprising a metallic envelope (12, 28),
- a first cable (1) provided with a first conductor (3) and extending into said envelope (12, 28) through a first opening thereof,
- a second cable (2) provided with a second conductor (4) and extending into said envelope (12, 28) through a second opening thereof, wherein the first conductor (3) is connected to the second conductor (4) inside said casing (11, 27),
- wherein each cable (1, 2) is provided with an electrically conducting screen (7, 8) that surrounds the conductor (3, 4) thereof and arranged to conduct a screen current caused by inductance generated by the conductor (3, 4) during operation, and wherein said envelope (12, 28) is in electric contact with at least one of said screens (7, 8),
- a connection means (15, 22) electrically connected to at least one of said screens (7, 8) and conducting said screen current to a corresponding screen of another cable, **characterised in that** said connection means (15, 22) comprises a separate electric conductor (18; 25, 26) arranged to carry said screen current while by-passing a major part of the metallic envelope (12, 28) as screen current carrier.

2. A cable joint arrangement according to claim 1, **characterised in that** said connection means (15, 22) is directly connected to said at least one screen (7, 8).

3. A cable joint arrangement according to claim 2, **characterised in that** said connection means (15, 22) is connected to said at least one screen (7, 8) inside said casing (11, 27).

4. A cable joint arrangement according to any one of claims 1-3, **characterised in that** said connection means (15) is connected to the screen (7) of the first cable (1) and the screen (8) of the second cable (2), thereby interconnecting said screens (7, 8).

5. A cable joint arrangement according to claim 4, **characterised in that** at least one of said screens (7, 8) of said first and second cables (1, 2) comprises at least one wire and that said separate electric conductor (18) of the connection means (15) is at least partly formed by said wire.

6. A cable joint arrangement according to any one of claims 1-3, **characterised in that** said connection means (22) comprises a first conductor (25) that connects the screen (7) of the first cable (1) with a screen of another cable than said second cable (2).

7. A cable joint arrangement according to claim 6, **characterised in that** said connection means (22) comprises a second conductor (26) that connects the screen (8) of the second cable (2) with a screen of another cable than said first cable (1).

8. A cable joint arrangement according to any one of claims 1-7, **characterised in that** the screen (7, 8) to which the conductor (18; 25, 26) of the connection means (15, 22) is connected presents a region in which it is exposed inside said casing (11, 27) with a distance to said metallic envelope (12, 28), and that the conductor (18; 25, 26) of the connection means (15, 22) is connected to the screen (7, 8) in said region.

9. A cable joint arrangement according to any one of claims 1-8, **characterised in that** the conductor (18, 25, 26) of the connection means (15, 22) presents an electric conductibility equal to or higher than that of the screen (7, 8) to which it is connected.

10. A cable joint arrangement according to any one of claims 1-9, **characterised in that** said major part of the metallic envelope (12, 28) comprises aluminium or an aluminium alloy.

11. A cable joint arrangement according to any one of claims 1-10, **characterised in that** the whole metallic envelope (12, 28) comprises aluminium or an aluminium alloy.
